(19) Europäisches Patentamt
European Patent Office
Office européen des brevets

(11) **EP 3 075 662 B1**

(12) **FASCICULE DE BREVET EUROPEEN**

(45) Date de publication et mention
de la délivrance du brevet:
**18.10.2017 Bulletin 2017/42**

(51) Int Cl.:
**B64C 27/46** *(2006.01)*    **B64D 31/06** *(2006.01)*
**F01D 21/00** *(2006.01)*    **F02C 3/10** *(2006.01)*
**F02C 9/00** *(2006.01)*    **F02C 9/26** *(2006.01)*

(21) Numéro de dépôt: **16161651.1**

(22) Date de dépôt: **22.03.2016**

(54) **PROCEDE ET DISPOSITIF POUR ARRETER UN TURBOMOTEUR EN FONCTIONNEMENT NOMINAL**

VERFAHREN UND VORRICHTUNG ZUM STOPPEN EINES TURBOMOTORS IM NENNBETRIEB

A METHOD AND A DEVICE FOR STOPPING A TURBOSHAFT ENGINE IN NOMINAL OPERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2015 FR 1500643**

(43) Date de publication de la demande:
**05.10.2016 Bulletin 2016/40**

(73) Titulaire: **Airbus Helicopters**
**13725 Marignane Cedex (FR)**

(72) Inventeurs:
• **ROSSOTTO, Régis**
**13012 MARSEILLE (FR)**

• **PICCONE, Jean-François**
**13480 CABRIES (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 2 735 508    EP-A2- 1 978 214**
**EP-A2- 2 636 596    US-A- 3 869 862**
**US-A- 4 738 098    US-A- 5 403 155**

**Description**

La présente invention concerne un procédé et un dispositif pour arrêter un turbomoteur en fonctionnement nominal.

Un véhicule et en particulier un aéronef peut être muni d'une pluralité de turbomoteurs.

Certains giravions sont ainsi munis de plusieurs turbomoteurs pour entraîner au moins un rotor de sustentation voire de propulsion. Par exemple, l'hélicoptère Super-Frelon possède trois turbomoteurs.

Classiquement, un turbomoteur comprend un générateur de gaz muni d'au moins un compresseur, d'une chambre de combustion et d'un ensemble de détente haute pression reliée au compresseur.

Le compresseur peut être muni d'une pluralité d'étages de compression, axiaux et/ou centrifuges. De même, l'ensemble de détente peut comprendre une pluralité de turbines de détente.

En outre, le turbomoteur comporte au moins une turbine de travail basse pression libre ou liée au générateur de gaz.

Le fonctionnement du turbomoteur est contrôlé par un système de gestion. Par exemple, un système de gestion est connu sous l'acronyme FADEC associé à l'expression anglaise « Full Authority Digital Engine Control ». Un système de gestion comprend usuellement un calculateur relié à divers capteurs et un doseur de carburant. Le doseur de carburant permet alors au système de gestion de contrôler le débit de carburant transmis au turbomoteur.

Le système de gestion est classiquement relié à un sélecteur, dit « sélecteur de commande » par commodité. Par exemple, le sélecteur de commande comporte trois positions.

Lorsque le sélecteur de commande se trouve dans une première position dite par exemple « position STOP », le turbomoteur est arrêté.

Lorsque le sélecteur de commande se trouve dans une deuxième position par exemple « position FLIGHT » le turbomoteur est en fonctionnement.

L'expression « fonctionnement nominal » utilisée par la suite est relative au fonctionnement du turbomoteur lorsque le sélecteur de commande est dans la position FLIGHT. Le turbomoteur peut alors fonctionner en mettant en oeuvre une pluralité de régimes de fonctionnement distincts.

Enfin, le sélecteur de commande comprend une position intermédiaire par exemple « position IDLE ». Lorsque le sélecteur de commande est positionné dans cette position IDLE, le turbomoteur fonctionne au ralenti. Le ralenti est utilisé au sol ou en vol pour réduire la puissance développée par le turbomoteur.

Pour arrêter un turbomoteur en fonctionnement nominal, un individu peut basculer l'interrupteur de commande de la position « FLIGHT » à la position « STOP ».

Lorsque l'interrupteur de commande est basculé sur la position STOP, le système de gestion ferme le doseur de carburant pour couper l'alimentation en carburant du turbomoteur. Le turbomoteur est alors coupé rapidement. La puissance développée par le moteur décroit selon un fort gradient, de l'ordre de 20 pourcents de la puissance courante par seconde.

La perte de puissance résultant de l'arrêt d'un turbomoteur se traduit en vol par des à-coups provoquant notamment des mouvements en lacet de l'aéronef. Ces à-coups sont ressentis par l'équipage et les passagers de l'aéronef. De tels à-coups sont nécessairement gênants, du moins d'un point de vue sensoriel.

Au sol, la situation est différente.

En premier lieu, la puissance développée par le turbomoteur est généralement faible au sol lors d'un fonctionnement nominal. La chute de puissance a alors un impact limité sur l'aéronef.

En second lieu, un éventuel à-coup tendant à provoquer un mouvement en lacet de l'aéronef est limité par la friction entre le train d'atterrissage de l'aéronef et le sol.

Par ailleurs, un arrêt direct du turbomoteur requis en basculant le sélecteur de commande de la position FLIGHT à la position STOP peut à termes entraîner la cokéfaction du carburant dans le turbomoteur. Ce phénomène de cokéfaction induit la transformation du carburant en un produit solide qui peut conduire à des dysfonctionnements du turbomoteur. Le carburant solidifié peut par exemple à termes boucher des injecteurs, empêcher le démarrage du turbomoteur, engendrer une perte de puissance du turbomoteur voire provoquer un arrêt non commandé du turbomoteur.

Pour éviter ce phénomène de cokéfaction, un pilote peut basculer en premier lieu le sélecteur de commande sur la position IDLE et maintenir le turbomoteur en position IDLE pendant un certain temps, avant de mettre l'interrupteur de commande sur la position STOP. Le passage au ralenti vise à obtenir une stabilisation thermique à basse température de la chambre de combustion du turbomoteur avant l'extinction complète du turbomoteur.

Le document US 4738098 fournit un enseignement de ce type.

Une telle procédure employée en vol, augmente considérablement la charge de travail d'un pilote. De plus, le passage au ralenti peut aussi induire des mouvements en lacet désagréables puisque la décroissance de puissance du turbomoteur est brutale comme dans le cas d'un arrêt requis avec la position STOP du sélecteur. Par ailleurs, cette procédure peut s'accompagner d'une réduction obligatoire du pas collectif des pales d'un rotor sur un giravion. Cette étape complexifie alors la procédure.

Parmi l'arrière plan technologique, le document US 4,479,619 propose un système de transmission de puissance pour des hélicoptères trimoteur.

Le document US 3,963,372 propose une solution de management de la puissance et de contrôle des moteurs pour des hélicoptères trimoteur. Le document WO2012/059671A2 propose deux moteurs à puissances maximales inégales.

Le document EP0091744 semble décrire un aéronef pourvu de trois moteurs identiques. Selon la description, les trois moteurs peuvent fonctionner simultanément. Toutefois, le troisième moteur peut être éteint en croisière. Lorsque les trois moteurs sont utilisés, une panne du troisième moteur est compensée par une augmentation de la puissance des moteurs principaux.

Les documents EP 2735508, EP 1978214, EP 2636596, US 5403155 et US 3869862 sont aussi connus.

La présente invention a alors pour objet de proposer un procédé automatique pour arrêter un turbomoteur sur requête d'un pilote ou d'un système de pilotage automatique.

L'invention concerne donc un procédé pour arrêter un turbomoteur en vol sur un aéronef multimoteur, le turbomoteur développant à chaque instant une puissance dite « puissance courante », le turbomoteur comportant un générateur de gaz muni d'au moins un organe effectuant à chaque instant une rotation à une vitesse dite « vitesse de rotation courante ».

Ce procédé comporte une étape de génération d'un ordre pour générer un ordre dit « ordre d'arrêt » ordonnant l'arrêt d'un turbomoteur dit « turbomoteur à arrêter », ce procédé mettant en oeuvre automatiquement et successivement pour le turbomoteur à arrêter les étapes suivantes lorsque l'ordre d'arrêt est généré :

- une étape de réduction de puissance comprenant les phases de :

    ▪ réduction de ladite puissance courante pour atteindre une puissance nulle, ladite puissance courante décroissant selon un taux de variation prédéterminé dit « taux de variation de puissance »,
    ▪ réduction de ladite vitesse de rotation courante pour que la vitesse de rotation courante atteigne une vitesse intermédiaire prédéterminée lorsque ladite puissance courante devient nulle,

- une étape de stabilisation thermique durant laquelle la vitesse de rotation courante reste égale à la vitesse intermédiaire,
- une étape d'extinction durant laquelle ladite vitesse de rotation courante est réduite pour atteindre une vitesse nulle.

Selon ce procédé, l'arrêt d'un turbomoteur en vol peut être automatisé de manière à être transparent pour un pilote.

Selon ce procédé, un ordre visant à arrêter totalement un turbomoteur est généré. L'ordre d'arrêt ne requiert donc pas la mise au ralenti du turbomoteur mais bien l'arrêt en tant que tel de ce turbomoteur.

Cet ordre d'arrêt peut être généré par un pilote à l'aide d'un sélecteur comportant une position dite « arrêt en vol ». Selon une variante, l'ordre d'arrêt est généré par un système de pilotage automatique lorsque l'aéronef évolue dans une phase de vol permettant l'arrêt en vol d'un turbomoteur. Un constructeur peut ainsi évaluer par essais et/ou simulations dans quelles conditions un turbomoteur peut être arrêté en vol.

La présente invention consiste alors à arrêter le turbomoteur de manière « douce » à savoir selon une vitesse contrôlée, pour d'une part éviter de générer des mouvements en lacet et d'autre part éviter un phénomène de cokéfaction du carburant.

Durant l'étape de réduction de puissance, la puissance du turbomoteur est réduite en appliquant un taux de variation de puissance limité. La puissance développée par le turbomoteur décroit selon un gradient relativement faible voire très faible qui tend à limiter les risques de génération d'à-coups en lacet.

La puissance développée par le turbomoteur à arrêter est réduite jusqu'à une puissance nulle.

Dans le même temps, la vitesse de rotation du générateur de gaz est réduite jusqu'à une vitesse intermédiaire.

Par exemple, le système de gestion du turbomoteur à arrêter commande le doseur de carburant de ce turbomoteur à arrêter pour réduire de manière adéquate le débit carburant. Par exemple, ce système de gestion applique une loi ou utilise une base de données pour déterminer la position du doseur de carburant à atteindre afin de réduire la puissance courante et la vitesse de rotation courante du turbomoteur de la manière requise.

A l'issue de l'étape de réduction de puissance, la puissance développée par le turbomoteur à arrêter est nulle. De plus, la vitesse de rotation courante du générateur de gaz atteint la vitesse intermédiaire.

L'étape de stabilisation thermique débute alors. Durant cette étape de stabilisation thermique, la vitesse de rotation courante du générateur de gaz est maintenue automatiquement à la vitesse intermédiaire pour permettre une stabilisation de la température dans le générateur de gaz afin d'éviter le phénomène de cokéfaction.

Une fois le régime de stabilisation thermique atteint, le turbomoteur à arrêter est donc maintenu à ce régime le temps nécessaire pour que la stabilisation thermique du turbomoteur soit établie.

Durant l'étape de stabilisation thermique, la puissance développée par le turbomoteur est toujours nulle. Le turbomoteur à arrêter ne délivre plus de couple mécanique aux ensembles dynamiques reliés à ce turbomoteur à arrêter.

L'étape de stabilisation thermique peut s'achever à l'issue d'une durée prédéterminée, ou lorsqu'une température du turbomoteur ne varie plus par exemple. A titre illustratif, une température est mesurée en aval du générateur de gaz, la fin de l'étape de stabilisation thermique dépendant de cette température.

Lorsque le turbomoteur à arrêter est thermiquement stable, le système de gestion commande automatiquement l'arrêt définitif du turbomoteur en fermant le doseur de carburant durant l'étape d'extinction ou en coupant directement l'arrivée de carburant.

La vitesse de rotation courante du générateur de gaz est réduite pour atteindre une vitesse nulle. La vitesse de rotation du générateur de gaz peut décroitre plus vite durant l'étape d'extinction que durant l'étape de réduction de puissance, puisque le turbomoteur ne délivre plus de puissance durant l'étape d'extinction. Une réduction de vitesse rapide de la vitesse de rotation du générateur de gaz a alors un impact limité sur le fonctionnement global de l'aéronef.

Ce procédé est donc un procédé automatique permettant d'éteindre un turbomoteur en vol, en limitant les risques de confrontation à des mouvements en lacets désagréables et/ou à un phénomène de cokéfaction.

De plus, ce procédé est entièrement automatisé. La charge de travail du pilote est alors réduite.

Le procédé peut de plus comporter une ou plusieurs des caractéristiques qui suivent.

Par exemple, l'aéronef comprenant un nombre donné de turbomoteurs et un anticipateur générant un ordre d'anticipation de puissance pour contrôler les turbomoteurs en fonction d'un ordre de pilotage transmis à un organe de contrôle contrôlant une trajectoire d'un aéronef, l'étape de réduction de puissance comporte une phase d'anticipation durant laquelle l'ordre d'anticipation, transmis à chaque turbomoteur non arrêté est augmenté en appliquant un taux de variation prédéterminé dit « taux de variation d'anticipation », le taux de variation d'anticipation étant fonction du taux de variation de puissance. Par exemple, le taux de variation d'anticipation est égal au quotient du taux de variation de puissance divisé par le nombre de turbomoteur moins un.

Ainsi, un aéronef peut comporter un anticipateur qui génère un ordre visant à anticiper le besoin de puissance à développer avec un turbomoteur, en fonction d'un ordre de pilotage donné à un organe de pilotage par le pilote ou par un système de pilotage automatique. L'expression « organe de contrôle contrôlant une trajectoire » désigne tout moyen aérodynamique permettant de contrôler un aéronef, tel qu'une pale d'un rotor de sustentation par exemple.

Par exemple, un anticipateur peut comprendre un potentiomètre actionné par une commande de pas collectif contrôlant le pas collectif des pales d'un rotor de sustentation et de propulsion. Le potentiomètre produit un ordre sous la forme d'un signal électrique qui varie en fonction de la position de la commande de pas collectif. Cet ordre est transmis au système de gestion des turbomoteurs pour traitement.

Dès lors, cette réalisation consiste à modifier l'ordre d'anticipation donné, cet ordre d'anticipation représentant une puissance à atteindre. L'ordre d'anticipation est augmenté pour compenser la réduction de puissance résultant de l'arrêt d'un turbomoteur.

Par exemple, un aéronef comporte trois turbomoteurs. Le procédé est appliqué pour arrêter en vol un turbomoteur. Durant l'étape de réduction de puissance, la puissance développée par le turbomoteur à arrêter est réduite en appliquant un taux de variation de puissance valant 20 Kilowatts par seconde par exemple.

Dès lors, l'ordre d'anticipation de puissance transmis à chaque turbomoteur restant en fonctionnement est au contraire augmenté d'un taux de variation d'anticipation égale au taux de variation de puissance divisé par le nombre de turbomoteurs devant resté en fonctionnement soit le nombre total de turbomoteur moins un, soit :

$$tx' = tx/(nbr-1),$$

où « tx' » le taux de variation d'anticipation, « tx » représente le taux de variation de puissance valant 20 Kilowatts par seconde, « nbr » représente le nombre de turbomoteurs de l'installation motrice, ce nombre nb étant égal à trois selon notre exemple, « / » représente le signe de la division.

Le taux de variation d'anticipation est alors augmenté de 10 Kilowatts par seconde.

En parallèle, l'aéronef augmente la valeur de l'anticipation en puissance transmise aux systèmes de gestion des turbomoteurs non arrêtés. Cette augmentation permet d'anticiper la réduction de puissance résultant de l'arrêt du turbomoteur à arrêter. La perte de puissance au niveau de l'aéronef est alors minimisée voire nulle. Par suite, les individus présents dans l'aéronef ne ressentent pas la décroissance de la puissance développée par le turbomoteur à arrêter.

Selon un autre aspect, le taux de variation de puissance est par exemple compris entre 1 et 15 pourcents d'une puissance de référence par seconde. Le taux de variation de puissance est alors exprimé en Watts par seconde.

Par exemple, la puissance de référence correspond à la puissance maximale au décollage dans les conditions connues sous les acronymes SL et ISA. Par ailleurs, le taux de variation de puissance peut être déterminé en fonction d'une phase de vol de l'aéronef.

Lorsque le turbomoteur développe une forte puissance, , le taux de variation de puissance peut être faible pour limiter les risques d'apparition d'à-coups gênants.

A l'inverse, lorsque le turbomoteur développe une faible puissance le taux de variation de puissance peut être élevé.

En particulier, le taux de variation de puissance est déterminé en fonction d'au moins un des paramètres suivants : un paramètre de pilotage de l'aéronef relatif à un paramètre contrôlé par un pilote à l'aide de commandes de vol, un paramètre de vol relatif à des conditions de vol de l'aéronef et un ou plusieurs paramètres moteur relatifs au fonctionnement du turbomoteur à arrêter, une information indiquant si l'aéronef contient des passagers.

Par exemple, si l'aéronef réalise un vol dit « vol technique », cet aéronef ne comporte pas de passager. L'aéronef transporte alors uniquement un équipage préparé aux conséquences d'un arrêt d'un turbomoteur en vol, et donc à d'éventuels à-coups résultant d'un tel arrêt. Par suite, une décélération lente et douce du turbomoteur n'est pas obligatoirement nécessaire. La décélération peut donc être rapide, tout en étant bornée par une limite de décélération pour éviter une extinction du turbomoteur lors de l'étape de réduction de vitesse.

Chaque paramètre de pilotage est par exemple à choisir dans une liste comprenant au moins : une information relative au pas collectif des pales d'un rotor de sustentation de l'aéronef, une information relative au pas des pales d'un rotor de contrôle du mouvement en lacet de l'aéronef.

En effet, un giravion peut comprendre un rotor dit « rotor principal » assurant au moins partiellement la sustentation de l'aéronef, voire aussi sa propulsion. De plus, le giravion peut comprendre un rotor dénommé parfois « rotor arrière » ou « rotor anticouple » permettant de contrôler un mouvement en lacet de l'aéronef.

L'aéronef comprend alors des commandes permettant de contrôler le pas collectif et le pas cyclique des pales du rotor principal. Par exemple, l'aéronef comporte un manche cyclique pour le contrôle du pas cyclique et un levier de pas collectif pour le contrôle du pas collectif des pales du rotor principal.

De plus, l'aéronef comprend des commandes permettant de contrôler le pas collectif des pales du rotor arrière, telles qu'un palonnier par exemple.

Si les commandes de vol requièrent une position de pas collectif élevée, l'aéronef se trouve dans une phase de vol nécessitant beaucoup de puissance de la part des turbomoteurs. Un arrêt brutal d'un turbomoteur serait fortement ressenti par l'équipage et les passagers. Dans ce cas-là, la décélération du turbomoteur est lente, le taux de variation de puissance étant faible.

A l'inverse, si les commandes de vol requièrent une position de pas collectif faible, par exemple lors d'une descente rapide, le turbomoteur peut être arrêté rapidement car la puissance demandée aux turbomoteurs dans ces phases de vol est généralement basse voire nulle. L'arrêt d'un moteur est alors difficile à percevoir pour un pilote ou un passager.

Par ailleurs, chaque paramètre de vol est éventuellement à choisir dans une liste comprenant au moins : une vitesse de l'aéronef, une altitude de l'aéronef, une température extérieure à l'aéronef, une vitesse de rotation d'un rotor de sustentation de l'aéronef, une masse de l'aéronef.

En fonction de ces paramètres, un constructeur sait déterminer si l'aéronef est dans une phase de vol nécessitant beaucoup de puissance ou une faible puissance de la part du turbomoteur.

Par exemple, un aéronef présentant une masse faible comparée à sa masse maximale requiert moins de puissance pour une phase de vol donnée que ce même aéronef chargé à sa masse maximale. De fait, pour une même phase de vol, l'arrêt d'un turbomoteur doit être réalisé avec un taux de variation de puissance plus faible avec un aéronef à masse élevée qu'avec un aéronef à masse faible.

De même, la vitesse d'avancement de l'aéronef est un paramètre qui influe directement sur la puissance à développer par l'installation motrice. Le domaine de vol peut donc être découpé virtuellement en fonction de la puissance nécessaire au regard de la vitesse d'avancement de l'aéronef, afin d'adapter pour chaque partie du domaine de vol la décélération du moteur à appliquer.

Par ailleurs chaque paramètre moteur est à choisir dans une liste comprenant au moins : une température du turbomoteur à arrêter, un couple du turbomoteur à arrêter, la vitesse de rotation du turbomoteur à arrêter.

Les paramètres du turbomoteur caractérisent en effet la puissance délivrée par ce turbomoteur.

Par ailleurs, au moins une pompe de gavage du turbomoteur à arrêter peut être coupée lorsque la vitesse de rotation courante du turbomoteur à arrêter est nulle.

Une pompe de gavage peut être utilisée pour transférer du carburant vers un turbomoteur. Une coupure automatique de la pompe de gavage d'un turbomoteur est alors envisageable pour finaliser complètement l'arrêt de ce turbomoteur.

Par ailleurs, l'aéronef comprenant au moins un turbomoteur muni d'une entrée d'air dynamique dirigée vers une extrémité avant de l'aéronef, on arrête préférentiellement ce turbomoteur.

Le pilote peut par exemple choisir d'éteindre préférentiellement un turbomoteur ayant une entrée d'air dynamique, à savoir une entrée d'air alimentée en air sous l'effet de l'avancement de l'aéronef. Une telle entrée d'air dynamique est orientée vers l'extrémité avant de l'aéronef.

Ainsi, le turbomoteur arrêté est susceptible de redémarrer plus rapidement comparé à un turbomoteur muni d'une entrée d'air statique, l'air entrant avec une certaine pression et une certaine vitesse dans le turbomoteur en vol d'avancement.

Par ailleurs, l'ordre d'arrêt est éventuellement pris en compte dans le cas de figure où l'aéronef évolue à une altitude supérieure à un seuil d'altitude.

Selon cette réalisation, le turbomoteur est arrêté uniquement à haute altitude, par exemple au-delà de 1500 pieds pour que le pilote ait suffisamment de temps disponible pour redémarrer le moteur avant que l'appareil n'atteigne le sol.

Outre un procédé, l'invention vise un dispositif d'arrêt pour arrêter un turbomoteur.

Un tel dispositif d'arrêt peut comporter un moyen de commande pour requérir l'arrêt du turbomoteur, le moyen de commande étant relié à une unité de traitement qui applique le procédé selon l'invention.

De plus, l'invention vise un aéronef muni d'une pluralité de turbomoteurs, cet aéronef comportant un tel dispositif d'arrêt pour au moins un turbomoteur.

L'invention et ses avantages apparaîtront avec plus de détails dans le cadre de la description qui suit avec des exemples donnés à titre illustratif en référence aux figures annexées qui représentent :

- la figure 1, une vue d'un aéronef selon l'invention,

- la figure 2, un schéma représentant un turbomoteur,

- la figure 3, un schéma présentant une première variante de l'invention,

- la figure 4, un schéma présentant une deuxième variante de l'invention,

- la figure 5, un schéma illustrant le procédé selon l'invention, et

- les figures 6 à 8, des diagrammes explicitant le fonctionnement de l'invention.

Les éléments présents dans plusieurs figures distinctes sont affectés d'une seule et même référence.

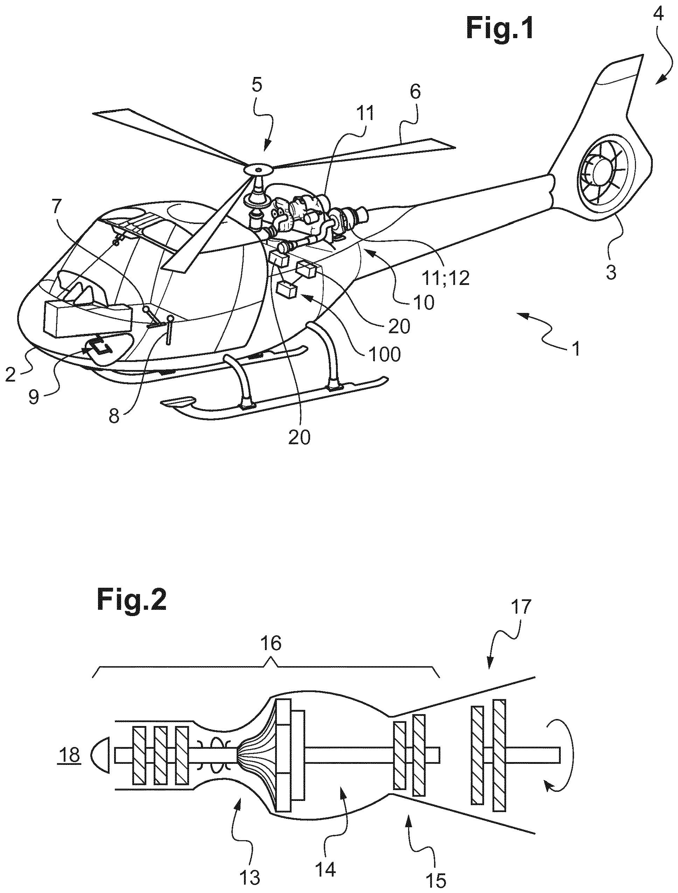

La figure 1 présente un aéronef 1 selon l'invention.

Cet aéronef comporte une structure s'étendant longitudinalement d'une extrémité avant 2 vers une extrémité arrière 3.

Cet aéronef est de plus un giravion muni d'un rotor principal 5 pourvu de pales 6 pour assurer au moins partiellement la sustentation voire la propulsion de l'aéronef. Le pas collectif et le pas cyclique des pales de ce rotor principal 5 peuvent être commandés respectivement par un levier de pas collectif 7 et un manche cyclique 8. Un système de pilotage automatique peut aussi commander le pas collectif et le pas cyclique des pales du rotor principal.

L'aéronef 1 comporte en outre un rotor de contrôle du mouvement en lacet 4 pour contrôler le mouvement en lacet de l'aéronef. Le pas collectif des pales de ce rotor de contrôle du mouvement en lacet 4 peut être commandé par un palonnier 9 et /ou un système de pilotage automatique.

Pour mettre en mouvement les différents rotors, l'aéronef comprend une installation motrice 10. L'installation motrice est munie d'une pluralité de turbomoteurs 11. En particulier, l'installation motrice comporte un nombre de turbomoteurs dit « nombre donné nbr » par la suite.

Chaque turbomoteur met par exemple en mouvement le rotor principal 5 au travers d'une boîte de transmission de puissance principale.

En référence à la figure 2, un turbomoteur comporte usuellement une entrée d'air, telle qu'une entrée d'air qui peut être du type dynamique 18 pour alimenter en air un générateur de gaz 16.

Ce générateur de gaz 16 inclut un compresseur 13 pourvu d'une ou plusieurs turbines pour comprimer l'air provenant de l'entrée d'air 18.

L'air comprimé est ensuite acheminé vers une chambre de combustion 14 du générateur de gaz 16. Les gaz chauds sortant de la chambre de combustion 14 se détendent et mettent en rotation un ensemble de détente 15 muni d'au moins une turbine haute pression.

Le compresseur 13 et l'ensemble de détente 15 sont mis en rotation à une vitesse de rotation Ng.

Par ailleurs, le turbomoteur comporte au moins une turbine basse pression 17 en aval du générateur de gaz. La turbine basse pression permet alors de mettre en mouvement un arbre de sortie du turbomoteur pour finalement entraîner en rotation les rotors de l'aéronef, le cas échéant via une boîte de transmission de puissance.

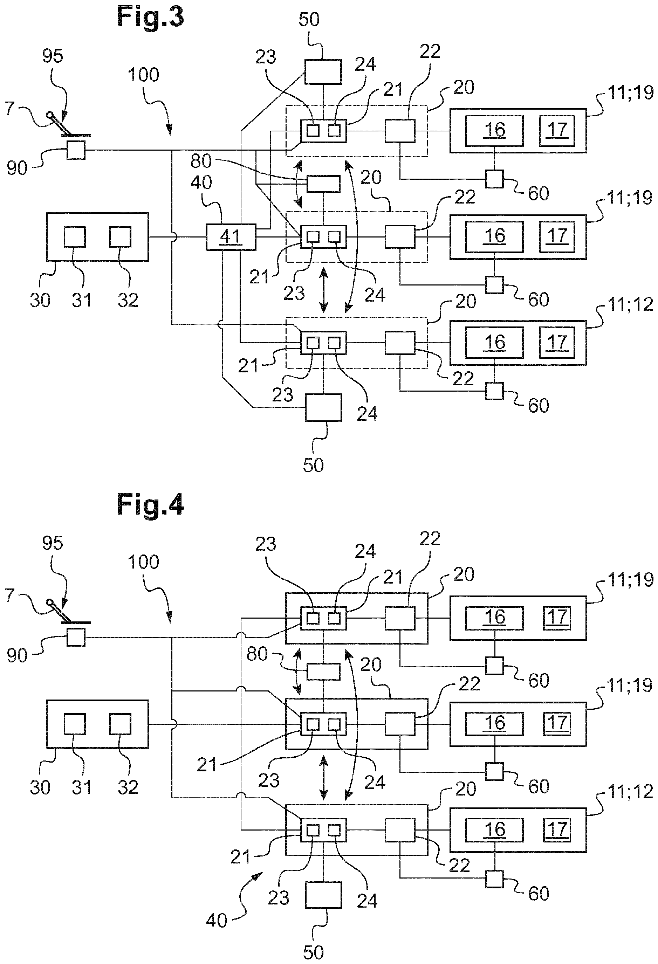

En référence à la figure 3, chaque turbomoteur peut coopérer avec une pompe de gavage 60. Une pompe de gavage transfère du carburant d'un réservoir vers le turbomoteur. Chaque turbomoteur peut aussi comporter une pompe d'aspiration.

Par ailleurs, chaque turbomoteur est contrôlé par un système de gestion 20. Les systèmes de gestion peuvent communiquer les uns avec les autres.

Chaque système de gestion 20 est par exemple muni d'un calculateur électronique 21. Un tel calculateur électronique 21 est par exemple pourvu d'au moins un processeur ou équivalent exécutant des informations mémorisées dans un espace de stockage 24.

De plus, le système de gestion inclut un doseur de carburant 22 contrôlé notamment par le calculateur électronique 21. Le doseur de carburant peut aussi être contrôlé mécaniquement dans un mode dégradé.

Chaque système de gestion est par railleurs relié à un ensemble de système de mesure 50.

Ces systèmes de mesure 50 peuvent inclure des capteurs déterminant une information relative à un paramètre de pilotage.

Le terme « capteur » est à entendre au sens large en faisant référence soit à un capteur en tant que tel, soit à un système permettant de déterminer la valeur d'un paramètre.

En particulier, des capteurs peuvent mesurer une information relative au pas collectif des pales du rotor principal 5, au travers de la position d'un organe d'une chaîne de commande de ce pas collectif par exemple. De même, des capteurs peuvent mesurer une information relative au pas des pales du rotor de contrôle du mouvement en lacet 4 de l'aéronef 1.

Ces capteurs peuvent par exemple déterminer la position d'organes commandant les pas concernés.

Ces systèmes de mesure 50 peuvent inclure des capteurs déterminant une information relative à un paramètre de vol. En particulier, des capteurs peuvent mesurer une vitesse de l'aéronef 1, telle que la vitesse air de l'aéronef par exemple. Un système anémobarométrique peut être utilisé par exemple.

Des capteurs peuvent aussi mesurer une altitude de l'aéronef à l'aide d'un capteur de pression ambiante ou d'un radioaltimètre par exemple, une température extérieure à l'aéronef à l'aide d'un thermomètre, ou encore la vitesse d'entraînement en rotation du rotor de sustentation 5 de l'aéronef.

La masse de l'aéronef peut aussi être évaluée, par exemple à l'aide d'une information de masse au décollage et d'une information relative à la masse du carburant consommé.

Les systèmes de mesure 50 peuvent inclure des capteurs déterminant la valeur d'au moins un paramètre moteur d'un turbomoteur. Un tel paramètre moteur est à choisir dans une liste comprenant au moins : une température du turbomoteur telle qu'une température en aval du générateur de gaz, un couple développé par le turbomoteur, la vitesse de rotation du générateur de gaz du turbomoteur à arrêter, la vitesse de rotation de la turbine libre, le débit carburant. L'expression « vitesse de rotation » fait par la suite référence à la vitesse de rotation du générateur de gaz d'un turbomoteur.

Par ailleurs, chaque système de gestion peut être relié à un anticipateur 90. Cet anticipateur 90 communique une information aux systèmes de gestion relative à la puissance à développer par chaque turbomoteur.

L'anticipateur 90 peut comporter un potentiomètre actionné par une commande de vol 95, tel qu'un levier de pas collectif 7 par exemple.

En outre, l'aéronef 1 comporte un dispositif dit « dispositif d'arrêt 100 » pour arrêter en vol un turbomoteur 11 dit « turbomoteur à arrêter 12 ».

Ce dispositif d'arrêt comporte un moyen de commande 30 pour requérir l'arrêt du turbomoteur à arrêter 12.

Le moyen de commande 30 peut comporter un organe 31 pouvant être manoeuvré par un individu, ou encore un système de pilotage automatique 32.

Le moyen de commande 30 communique alors avec une unité de traitement 40.

En outre, le dispositif d'arrêt peut comporter un moyen de paramétrage à manipuler par un pilote pour indiquer si des passagers sont présents dans l'aéronef. Cette information est mémorisée pour être accessible à l'unité de traitement.

Cette unité de traitement 40 comporte une unité dite « unité dédiée 41 » selon la réalisation de la figure 3. L'unité de traitement 40 comporte alors par exemple un processeur ou équivalent exécutant des instructions mémorisées dans un espace de stockage pour appliquer le procédé selon l'invention.

L'unité de traitement peut alors être reliée aux systèmes de mesure 50 voire à l'anticipateur 90. De plus, l'unité de traitement 40 est reliée à chaque système de gestion, voire à chaque pompe de gavage.

Selon la variante de la figure 4, chaque système de gestion fait partie de l'unité de traitement 40.

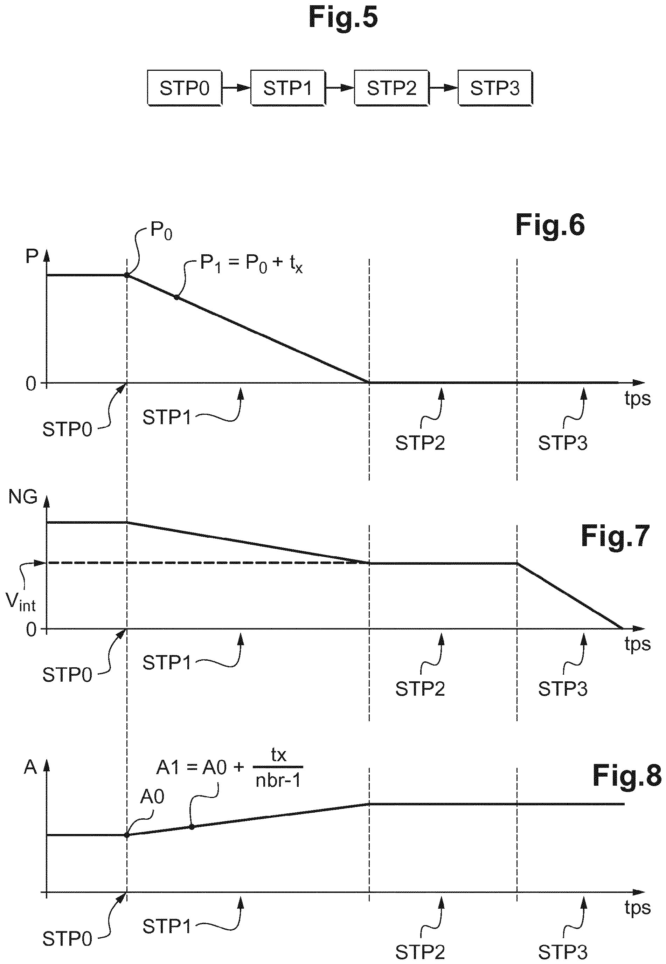

En référence à la figure 5, le dispositif d'arrêt permet d'arrêter en « douceur » un turbomoteur à arrêter 12 en vol.

Ce procédé est aussi illustré par les figures 6 à 8.

La figure 6 présente ainsi un diagramme comprenant en ordonnée la puissance P développée par le turbomoteur à arrêter et en abscisse le temps.

La figure 7 présente un diagramme comprenant en ordonnée la vitesse de rotation Ng du générateur de gaz du turbomoteur à arrêter et en abscisse le temps.

La figure 8 présente ainsi un diagramme comprenant en ordonnée un ordre d'anticipation A transmis par l'anticipateur 90 et en abscisse le temps.

Durant une étape de génération d'un ordre STP0 et en référence à la figure 5, le moyen de commande génère un ordre d'arrêt ordonnant l'arrêt d'un turbomoteur dit « turbomoteur à arrêter 12 ».

Selon la variante de la figure 3, l'ordre d'arrêt est transmis à l'unité dédiée 41 de l'unité de traitement 40.

Selon la variante de la figure 4, l'ordre d'arrêt est transmis à un système de gestion de l'unité de traitement, et en particulier au système de gestion du turbomoteur à arrêter 12.

Eventuellement, le turbomoteur à arrêter est un turbomoteur muni d'une entrée d'air dynamique 18 dirigée vers une extrémité avant 2 de l'aéronef 1.

En outre, l'ordre d'arrêt peut éventuellement être pris en compte que si l'aéronef 1 se situe à une altitude supérieure à un seuil d'altitude.

Si l'ordre d'arrêt est pris en considération et en référence à la figure 5, l'unité de traitement 40 met en oeuvre automatiquement une étape de réduction de puissance STP1.

En référence à la figure 6, durant cette étape de réduction de puissance STP1, l'unité de traitement requiert la réduction de la puissance courante développée par le turbomoteur à arrêter pour atteindre une puissance nulle.

Cette puissance courante décroit alors en fonction d'un taux de variation prédéterminé dit « taux de variation de puissance tx ».

A un instant de calcul donné la puissance P1 est donc égale à la puissance P0 à l'instant de calcul précédent moins le taux de variation de puissance tx.

Ce taux de variation de puissance tx est par exemple compris dans une plage restreinte comprise entre 1 et 15 pourcents d'une puissance de référence Pref par seconde. Cette plage permet d'éviter une extinction prématurée du turbomoteur à arrêter, et tend à éviter la génération d'à-coups sur l'aéronef.

Cette puissance de référence Pref correspond à la puissance maximale au décollage à SL ISA.

En outre, le taux de variation de puissance tx peut être déterminé en fonction d'une phase de vol de l'aéronef par l'unité de traitement. La phase de vol peut être déterminée à l'aide d'une vitesse d'avancement de l'aéronef par exemple.

En particulier, le taux de variation de puissance tx est déterminé en fonction d'au moins un des paramètres suivants : un paramètre de pilotage de l'aéronef relatif à un paramètre contrôlé par un pilote, un paramètre de vol relatif à des conditions de vol de l'aéronef 1 et un paramètre moteur relatif au fonctionnement du turbomoteur à arrêter 12, une information indiquant si l'aéronef 1 contient des passagers.

Par exemple, un constructeur effectue durant une étape d'initialisation de multiples essais, tests ou simulations pour déterminer les paramètres ayant un impact sur le taux de variation de puissance à appliquer sur un aéronef donné.

Dès lors et à l'aide de cette étape d'initialisation, le constructeur peut déterminer et mémoriser de multiples taux de variation puissance tx fonction d'au moins un desdits paramètres, ou encore au moins une loi fournissant un tel taux en fonction d'au moins un desdits paramètres.

L'unité de traitement 40 peut alors utiliser le système de mesure 50 pour avoir accès aux diverses informations nécessaires.

En référence à la figure 7, durant cette étape de réduction de puissance STP1, l'unité de traitement requiert de plus la réduction de la vitesse de rotation courante Ng du générateur de gaz du turbomoteur pour que la vitesse de rotation courante atteigne une vitesse intermédiaire Vint prédéterminée lorsque ladite puissance courante devient nulle.

Pour réaliser cette étape de réduction de puissance STP1 et selon la variante de la figure 3, l'unité dédiée 41 de l'unité de traitement 40 communique avec le système de gestion du turbomoteur à arrêter pour lui fournir le taux de variation de puissance à appliquer.

Le système de gestion de ce turbomoteur à arrêter en déduit une consigne de position du doseur de carburant à piloter pour réduire la puissance développée par le turbomoteur à arrêter et sa vitesse de rotation Ng de la manière adéquate.

Selon la variante de la figure 4, le système de gestion du turbomoteur à arrêter détermine une consigne de position du doseur de carburant directement, ou indirectement en calculant au préalable le taux de variation de puissance à atteindre.

Par ailleurs et en référence à la figure 8, l'étape de réduction de puissance STP1 peut comporter une phase d'anticipation durant laquelle l'ordre d'anticipation A transmis par l'anticipateur 90 à chaque turbomoteur 11 non arrêté est augmenté. Cet ordre d'anticipation A est augmenté en appliquant un taux de variation prédéterminé dit « taux de variation d'anticipation tx' » qui est fonction du taux de variation d'anticipation tx.

Par exemple, le taux de variation d'anticipation tx' est égal au quotient du taux de variation de puissance tx divisé par le nombre donné nbr de turbomoteurs sur l'aéronef moins un.

A un instant de calcul donné l'ordre d'anticipation A1 est donc égal à l'ordre d'anticipation A0 à l'instant de calcul précédent plus le taux de variation de puissance tx divisé le nombre donné nbr moins un.

Pour réaliser cette phase d'anticipation et selon la variante de la figure 3, l'unité dédiée de l'unité de traitement communique avec les systèmes de gestion des turbomoteurs 18 à ne pas arrêter pour leur fournir le taux de variation de puissance par exemple.

Les systèmes de gestion de ces turbomoteurs 18 à ne pas arrêter en déduisent une consigne de position des doseurs de carburant correspondants à atteindre.

Selon la variante de la figure 4, le système de gestion du turbomoteur à arrêter transmet par exemple le taux de variation de puissance aux systèmes de gestions des autres turbomoteurs.

En référence à la figure 5, durant une étape de stabilisation thermique STP2, la vitesse de rotation courante Ng reste égale à la vitesse intermédiaire Vint.

Enfin, durant une étape d'extinction STP3, la vitesse de rotation courante est réduite pour atteindre une vitesse nulle. Le turbomoteur à arrêter est alors complètement éteint.

Eventuellement, chaque pompe de gavage 60 du turbomoteur à arrêter 12 est coupée lorsque cette vitesse de rotation courante du turbomoteur à arrêter 12 est nulle.

Selon la variante de la figure 3, l'unité dédiée de l'unité de traitement communique avec le système de gestion du turbomoteur à arrêter pour requérir la fermeture du doseur de carburant correspondant ou la fermeture de l'arrivée de carburant, puis le cas échéant pour couper chaque pompe de gavage adéquate.

Selon la variante de la figure 4, le système de gestion du turbomoteur à arrêter ferme le doseur de carburant directement ou ferme l'arrivée de carburant, et le cas échéant chaque pompe de gavage adéquate.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications annexées.

**Revendications**

1. Procédé pour arrêter un turbomoteur (11) en vol sur un aéronef (1) multimoteur, ledit turbomoteur (11) développant à chaque instant une puissance courante, ledit turbomoteur (11) comportant un générateur de gaz (16) muni d'au moins un organe (13, 15) effectuant à chaque instant une rotation à une vitesse de rotation courante (Ng),
**caractérisé en ce que** le procédé comporte une étape de génération d'un ordre pour générer un ordre d'arrêt ordonnant l'arrêt d'un turbomoteur dit «turbomoteur à arrêter (12) », ce procédé mettant en oeuvre automatiquement et successivement pour le turbomoteur à arrêter (12) les étapes suivantes lorsque ledit ordre d'arrêt est généré :

- une étape de réduction de puissance (STP1) comprenant les phases de :

■ réduction de ladite puissance courante pour atteindre une puissance nulle, ladite puissance courante décroissant selon un taux de variation prédéterminé dit « taux de variation de puissance (tx) »,
■ réduction de ladite vitesse de rotation courante pour que la vitesse de rotation courante atteigne une vitesse intermédiaire (Vint) prédéterminée lorsque ladite puissance courante devient nulle,

- une étape de stabilisation thermique (STP2) durant laquelle la vitesse de rotation courante reste égale à la vitesse intermédiaire (Vint),
- une étape d'extinction (STP3) durant laquelle ladite vitesse de rotation courante est réduite pour atteindre une vitesse nulle.

2. Procédé selon la revendication 1, **caractérisé en ce que** ledit aéronef (1) comprenant un nombre donné (nbr) de turbomoteurs (11) et un anticipateur (90) générant un ordre d'anticipation de puissance pour contrôler les turbomoteurs (11) en fonction d'un ordre de pilotage transmis à un organe de contrôle contrôlant une trajectoire d'un aéronef, ladite étape de réduction de puissance comporte une phase d'anticipation durant laquelle ledit ordre d'anticipation transmis à chaque turbomoteur non arrêté est augmenté en appliquant un taux de variation prédéterminé dit « taux de variation d'anticipation (tx') » qui est fonction du taux de variation de puissance.

3. Procédé selon la revendication 2, **caractérisé en ce que** ledit taux de variation d'anticipation (tx') est égal au quotient du taux de variation de puissance (tx) divisé par ledit nombre donné (nbr) de turbomoteurs moins un.

4. Procédé selon l'une quelconque des revendications 1 à 2, **caractérisé en ce que** ledit taux de variation de puissance (tx) est compris entre 1 et 15 pourcents d'une puissance de référence (Pref) par seconde.

5. Procédé selon la revendication 4, **caractérisé en ce que** ladite puissance de référence (Pref) correspond à la puissance courante développée par ledit turbomoteur à arrêter (12) lorsque ledit ordre d'arrêt est donné.

6. Procédé selon l'une quelconque des revendications 1 à 5, **caractérisé en ce que** le taux de variation de puissance (tx) est déterminé en fonction d'une phase de vol de l'aéronef.

7. Procédé selon l'une quelconque des revendications 1 à 6, **caractérisé en ce que** le taux de variation de puissance (tx) est déterminé en fonction d'au moins un des paramètres suivants : un paramètre de pilotage de l'aéronef relatif à un paramètre contrôlé par un pilote, un paramètre de vol relatif à des conditions de vol de l'aéronef (1) et un paramètre moteur relatif au fonctionnement du turbomoteur à arrêter (12), une information indiquant si l'aéronef (1) contient des passagers.

8. Procédé selon la revendication 7, **caractérisé en ce que** chaque paramètre de pilotage est à choisir dans une liste comprenant au moins : une information relative au pas collectif de pales d'un rotor de sustentation (5) de l'aéronef (1), une information relative au pas de pales d'un rotor de contrôle du mouvement en lacet (4) de l'aéronef (1).

9. Procédé selon la revendication 7, **caractérisé en ce que** chaque paramètre de de vol est à choisir dans une liste comprenant au moins : une vitesse de l'aéronef (1), une altitude de l'aéronef, une température extérieure à l'aéronef, une vitesse d'un rotor de sustentation de l'aéronef, une masse de l'aéronef.

10. Procédé selon la revendication 7, **caractérisé en ce que** chaque paramètre moteur est à choisir dans une liste comprenant au moins : une température du turbomoteur à arrêter (12), un couple du turbomoteur à arrêter (12), la vitesse de rotation courante du générateur de gaz du turbomoteur à arrêter (12).

11. Procédé selon l'une quelconque des revendications 1 à 10, **caractérisé en ce qu'**au moins une pompe de gavage (60) du turbomoteur à arrêter (12) est coupée lorsque ladite vitesse de rotation courante du turbomoteur à arrêter (12) est nulle.

12. Procédé selon l'une quelconque des revendications 1 à 11, **caractérisé en ce que** ledit aéronef (1) comprenant au moins un turbomoteur muni d'une entrée d'air dynamique (18) dirigée vers une extrémité avant (2) de l'aéronef (1), on arrête ce turbomoteur.

13. Procédé selon l'une quelconque des revendications 1 à 12, **caractérisé en ce que** ledit ordre d'arrêt est pris en compte que si l'aéronef (1) évolue a une altitude supérieure à un seuil d'altitude.

14. Dispositif d'arrêt pour arrêter un turbomoteur, **caractérisé en ce que** ledit dispositif d'arrêt (100) comporte un moyen de commande (30) pour requérir l'arrêt du turbomoteur à arrêter (12), ledit moyen de commande (30) étant relié à une unité de traitement (40) qui applique le procédé selon l'une quelconque des revendications 1 à 13.

15. Aéronef (1) muni d'une pluralité de turbomoteurs, **caractérisé en ce que** ledit aéronef (1) comporte un dispositif d'arrêt (100) selon la revendication 14.

**Patentansprüche**

1. Verfahren zum Stoppen eines Turbomotors (11) eines Luftfahrzeugs (1) mit mehreren Motoren im Flug, wobei der Turbomotor (11) in jedem Moment eine aktuelle Leistung entwickelt, wobei der Turbomotor (11) einen Gasgenerator (16) aufweist mit mindestens einem Element (13, 15), welches in jedem Moment eine Rotation mit einer aktuellen Drehgeschwindigkeit (Ng) ausführt, **dadurch gekennzeichnet, dass** das Verfahren einen Schritt der Erzeugung eines Befehls aufweist zum Erzeugen eines Stoppbefehls, der das Stoppen eines "zu stoppender Turbomotor (12)" genannten Turbomotors anordnet, wobei das Verfahren automatisch und aufeinanderfolgend für den zu stoppenden Turbomotor (12) folgende Schritte ausführt, wenn der Stoppbefehl erzeugt wurde:

    - einen Schritt der Verminderung der Leistung (STP1) mit den Phasen:

        ■ Verminderung der aktuellen Leistung, um eine Leistung Null zu erreichen, wobei die aktuelle Leistung gemäß einer vorbestimmten "Leistungsänderungsrate (tx)" genannten Änderungsrate abnimmt,
        ■ Verminderung der aktuellen Drehgeschwindigkeit, damit die aktuelle Drehgeschwindigkeit eine vorbestimmte Zwischengeschwindigkeit (Vint) erreicht, wenn die aktuelle Leistung Null wird,

    - einen Schritt der thermischen Stabilisierung (STP2), während dem die aktuelle Drehgeschwindigkeit gleich der Zwischengeschwindigkeit (Vint) bleibt,
    - einen Schritt der Abbremsung (STP3), während dem die aktuelle Drehgeschwindigkeit reduziert wird, um eine Geschwindigkeit Null zu erhalten.

2. Verfahren nach Anspruch 1, **dadurch gekennzeichnet, dass** das Luftfahrzeug (1) eine gegebene Anzahl (nbr) von Turbomotoren (11) und eine Vorsteuerung (90) aufweist, die einen Leistungsvorsteuerungsbefehl erzeugt, um die Turbomotoren (11) in Abhängigkeit von einem Steuerbefehl zu steuern, der an ein Steuerelement übertragen wird, welches eine Flugbahn eines Luftfahrzeugs steuert, wobei der Schritt der Verminderung der Leistung eine Phase der Vorsteuerung aufweist, während der der Vorsteuerungsbefehl, der an jeden nicht gestoppten Turbomotor übertragen wurde, erhöht wird durch Anwendung einer vorbestimmten "Vorsteuerungsänderungsrate (tx')" genannten Änderungsrate, die von der Leistungsänderungsrate abhängt.

3. Verfahren nach Anspruch 2, **dadurch gekennzeichnet, dass** die Vorsteuerungsänderungsrate (tx') gleich dem Quotienten aus der Leistungsänderungsrate (tx) dividiert durch die gegebene Anzahl (nbr) von Turbomotoren minus eins ist.

4. Verfahren nach einem der Ansprüche 1 bis 2, **dadurch gekennzeichnet, dass** die Leistungsänderungsrate (tx) zwischen 1 und 15 Prozent einer Bezugsleistung (Pref) pro Sekunde liegt.

5. Verfahren nach Anspruch 4, **dadurch gekennzeichnet, dass** die Bezugsleistung (Pref) einer aktuellen Leistung entspricht, die von dem zu stoppenden Turbomotor (12) entwickelt wird, während der Stoppbefehl gegeben wird.

6. Verfahren nach einem der Ansprüche 1 bis 5, **dadurch gekennzeichnet, dass** die Leistungsänderungsrate (tx) in Abhängigkeit von einer Flugphase des Luftfahrzeugs bestimmt wird.

7. Verfahren nach einem der Ansprüche 1 bis 6, **dadurch gekennzeichnet, dass** die Leistungsänderungsrate (tx) in Abhängigkeit von mindestens einem der folgenden Parameter bestimmt wird: einem Steuerungsparameter des Luftfahrzeugs bezüglich eines von einem Piloten kontrollierten Parameters, einem Flugparameter bezüglich Flugbedingungen des Luftfahrzeugs (1) und einem Motorparameter bezüglich des Betriebs des zu stoppenden Turbomotors (12), einer Information, die anzeigt, ob sich Passagiere im Luftfahrzeug (1) befinden.

8. Verfahren nach Anspruch 7, **dadurch gekennzeichnet, dass** jeder Steuerungsparameter aus einer Liste auszuwählen ist, die mindestens umfasst: eine Information bezüglich des kollektiven Rotorblattverstellwinkels eines Auftriebsrotors (5) des Luftfahrzeugs (1), eine Information bezüglich des Verstellwinkels von Rotorblättern eines Rotors zur Steuerung der Gierbewegung (4) des Luftfahrzeugs (1).

9. Verfahren nach Anspruch 7,
**dadurch gekennzeichnet, dass** jeder Flugparameter aus einer Liste auszuwählen ist, die mindestens aufweist: eine Geschwindigkeit des Luftfahrzeugs (1), eine Flughöhe des Luftfahrzeugs, eine Außentemperatur am Luftfahrzeug, eine Drehgeschwindigkeit eines Auftriebsrotors des Luftfahrzeugs, eine Masse des Luftfahrzeugs.

10. Verfahren nach Anspruch 7,
**dadurch gekennzeichnet, dass** jeder Motorparameter auszuwählen ist aus einer Liste, die mindestens umfasst: eine Temperatur des zu stoppenden Turbomotors (12), ein Drehmoment des zu stoppenden Turbomotors (12), die aktuelle Drehgeschwindigkeit des Gasgenerators des zu stoppenden Turbomotors (12).

11. Verfahren nach einem der Ansprüche 1 bis 10,
**dadurch gekennzeichnet, dass** mindestens eine Vordruckpumpe (6) des zu stoppenden Turbomotors (12) angehalten wird, wenn die aktuelle Drehgeschwindigkeit des zu stoppenden Turbomotors (12) gleich Null ist.

12. Verfahren nach einem der Ansprüche 1 bis 11,
**dadurch gekennzeichnet, dass** das Luftfahrzeug (1) mindestens einen Turbomotor aufweist mit einem dynamischen Lufteinlass (18), der zum vorderen Ende (2) des Luftfahrzeugs (1) ausgerichtet ist, wobei dieser Turbomotor gestoppt wird.

13. Verfahren nach einem der Ansprüche 1 bis 12,
**dadurch gekennzeichnet, dass** der Stoppbefehl nur dann berücksichtigt wird, wenn das Luftfahrzeug (1) in einer Flughöhe fliegt, die größer ist als ein Flughöhenschwellenwert.

14. Stoppvorrichtung zum Stoppen eines Turbomotors,
**dadurch gekennzeichnet, dass** die Stoppvorrichtung (100) ein Steuermittel (30) aufweist, um das Stoppen des zu stoppenden Turbomotors (12) zu befehlen, wobei das Steuermittel (30) mit einer Verarbeitungseinheit (40) verbunden ist, die das Verfahren nach einem der Ansprüche 1 bis 13 anwendet.

15. Luftfahrzeug (1) mit einer Mehrzahl von Turbomotoren,
**dadurch gekennzeichnet, dass** das Luftfahrzeug (1) eine Stoppvorrichtung (100) nach Anspruch 14 aufweist.

**Claims**

1. A method for stopping a turboshaft engine (11) in flight on a multi-engine aircraft (1), said turboshaft engine (11) developing at each moment a current power, said turboshaft engine (11) comprising a gas generator (16) provided with at least one member (13, 15) effecting at each moment a rotation at a current speed of rotation (Ng), **characterised in that** the method comprises a step of generation of a command for generating a stop command ordering the stopping of a turboshaft engine referred to as "turboshaft engine to be stopped (12)", this method automatically and in succession implementing the following steps for the turboshaft engine to be stopped (12) when said stop command is generated:

    - a power reduction step (STP1) comprising the phases of:

        • reducing said current power in order to achieve a zero power, said current power decreasing at a predetermined variation rate referred to as "power variation rate (tx)",
        • reducing said current speed of rotation so that the current speed of rotation reaches a predetermined intermediate speed (Vint) when said current power becomes zero,

    - a thermal stabilisation step (STP2) during which the current speed of rotation remains equal to the intermediate speed (Vint),
    - a shutdown step (STP3) during which said current speed of rotation is reduced in order to achieve a zero speed.

2. A method according to Claim 1,
**characterised in that**, said aircraft (1) comprising a given number (nbr) of turboshaft engines (11) and an anticipator (90) generating a power anticipation command for controlling the turboshaft engines (11) as a function of a piloting command transmitted to a control member controlling a path of an aircraft, said power reduction step comprises an anticipation phase during which said anticipation command transmitted to each non-stopped turboshaft engine is increased by applying a predetermined variation rate referred to as "anticipation variation rate (tx')" which is a function of the power variation rate.

3. A method according to Claim 2,
**characterised in that** said anticipation variation rate (tx') is equal to the quotient of the power variation rate (tx) divided by said given number (nbr) of turboshaft engines minus one.

4. A method according to any one of Claims 1 to 2,
**characterised in that** said power variation rate (tx) is of between 1 and 15 percent of a reference power (Pref) per second.

5. A method according to Claim 4, **characterised in that** said reference power (Pref) corresponds to the current power developed by said turboshaft engine to be stopped (12) when said stop command is given.

6. A method according to any one of Claims 1 to 5, **characterised in that** the power variation rate (tx) is determined as a function of a flight phase of the aircraft.

7. A method according to any one of Claims 1 to 6, **characterised in that** the power variation rate (tx) is determined as a function of at least one of the following parameters: a piloting parameter of the aircraft relating to a parameter controlled by a pilot; a flight parameter relating to flight conditions of the aircraft (1), and an engine parameter relating to the operation of the turboshaft engine to be stopped (12); information indicating whether the aircraft (1) contains passengers.

8. A method according to Claim 7, **characterised in that** each piloting parameter is to be selected from a list comprising at least: information relating to the collective pitch of blades of a lift rotor (5) of the aircraft (1); information relating to the blade pitch of a rotor controlling the yawing motion (4) of the aircraft (1).

9. A method according to Claim 7, **characterised in that** each flight parameter is to be selected from a list comprising at least: a speed of the aircraft (1); an altitude of the aircraft; a temperature external to the aircraft; a speed of a lift rotor of the aircraft; a mass of the aircraft.

10. A method according to Claim 7, **characterised in that** each engine parameter is to be selected from a list comprising at least: a temperature of the turboshaft engine to be stopped (12); a torque of the turboshaft engine to be stopped (12); the current speed of rotation of the gas generator of the turboshaft engine to be stopped (12).

11. A method according to any one of Claims 1 to 10, **characterised in that** at least one booster pump (60) of the turboshaft engine to be stopped (12) is switched off when said current speed of rotation of the turboshaft engine to be stopped (12) is zero.

12. A method according to any one of Claims 1 to 11, **characterised in that**, said aircraft (1) comprising at least one turboshaft engine provided with a dynamic air inlet (18) directed towards a front end (2) of the aircraft (1), this turboshaft engine is stopped.

13. A method according to any one of Claims 1 to 12, **characterised in that** said stop command is taken into account [only] if the aircraft (1) is flying at an altitude greater than an altitude threshold.

14. A stopping device for stopping a turboshaft engine, **characterised in that** said stopping device (100) comprises a control means (30) for requiring the stoppage of the turboshaft engine to be stopped (12), said control means (30) being connected to a processing unit (40) which applies the method according to any one of Claims 1 to 13.

15. An aircraft (1) provided with a plurality of turboshaft engines, **characterised in that** said aircraft (1) comprises a stopping device (100) according to Claim 14.

# Fig.1

# Fig.2

# Fig.5

```
STP0 → STP1 → STP2 → STP3
```

## Fig.6

$P_0$

$P_1 = P_0 + t_x$

P

0

tps

STP0

STP1

STP2

STP3

## Fig.7

NG

$V_{int}$

0

tps

STP0

STP1

STP2

STP3

## Fig.8

$$A1 = A0 + \frac{tx}{nbr-1}$$

A0

A

tps

STP0

STP1

STP2

STP3

# Fig.3

# Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4738098 A
- US 4479619 A
- US 3963372 A
- WO 2012059671 A2
- EP 0091744 A
- EP 2735508 A
- EP 1978214 A
- EP 2636596 A
- US 5403155 A
- US 3869862 A